# EUROPEAN PATENT APPLICATION

(11) **EP 4 645 895 A1**
(43) Date of publication of application: **05.11.2025**
(21) Application number: 23915602.9
(22) Date of filing: 08.09.2023
(51) Int. Cl.: H04Q 11/00

(54) **METHOD AND APPARATUS FOR DETERMINING OPTICAL SPLITTER PORT CONNECTED TO OPTICAL NETWORK UNIT**

(30) Priority: 10.01.2023 CN 202310037629
(71) Applicant: ZTE CORPORATION, Shenzhen, Guangdong 518057 (CN)
(72) Inventor: HE, Zhimin, Shenzhen, Guangdong 518057 (CN); ZHU, Songlin, Shenzhen, Guangdong 518057 (CN); XIE, Yunpeng, Shenzhen, Guangdong 518057 (CN); MA, Aiping, Shenzhen, Guangdong 518057 (CN)
(74) Representative: Mitola, Marco
(86) International application number: PCT/CN2023/117805
(87) International publication number: WO 2024/148844

(57) **Abstract**

The embodiments of the present invention provide a method and an apparatus for determining an optical splitter port connected to an optical network unit. The method includes: sequentially sending a plurality of probe optical signals having different wavelengths, and notifying a designated target ONU to send a Raman pump signal, wherein the probe optical signals are combined with a downlink service optical signal and then injected into a trunk optical fiber, and are blocked or enter an access optical fiber and a plurality of ONUs after being subjected to filtering by an optical filter at an optical splitter port of a distribution optical fiber, and a Raman effect is generated between the probe optical signals which enter the ONUs via the optical filter and the Raman pump signal; sequentially receiving optical signal powers of characteristic signals corresponding to the plurality of probe optical signals; determining optical filtering characteristics of an optical splitter port according to the power change characteristics of the optical signal powers; and determining the optical splitter port connected to the target ONU according to the optical filtering characteristics of the optical splitter port. The present invention can solve the problem in the related art of how to identify which branch link an ONU is connected to, and can identify a port of each stage of optical splitter that the ONU is connected to.

## Description

### Cross-Reference to Related Application

The present invention is based on Chinese patent application CN 202310037629.2, filed on January 10, 2023 and entitled "Method and Apparatus for Determining Optical Splitter Port Connected to Optical Network Unit", and claims priority to this patent application, the invention of which is incorporated herein by reference in its entirety.

### Technical Field

The embodiments of the present invention relate to the field of network communications, and in particular, to a method and an apparatus for determining an optical splitter port connected to an optical network unit.

### Background

A PON system mainly consists of an Optical Line Terminal (OLT) at the central office, an Optical Network Unit (ONU) or an Optical Network Termination (ONT) at the user end, and an Optical Distribution Network (ODN). An Optical Distribution Network (ODN) is a network for distributing optical signals between an optical line terminal and an optical network terminal, mainly consists of passive optical components such as optical fibers, optical splitters and optical fiber connectors, and is a typical point-to-multipoint network structure. In practical use, the ODN can be divided into a trunk section optical fiber, a distribution section optical fiber and an access section optical fiber, wherein the distribution section optical fiber consists of one stage or multiple stages of optical splitters, one end of the access section optical fiber is connected to an ONU, and the other end is connected to an output port of the optical splitter, thereby forming a plurality of branch links which can be connected to different ONUs from the trunk section to the access section via the distribution section. Due to the characteristics of PON services, which branch link an ONU is connected to does not affect the actual PON services. This can lead to the random selection of an available idle branch link for use or the selection of an optical splitter port which is inconsistent with the actual plan during actual operations, ultimately resulting in uncertainty in ODN resources, and even affecting the waste of overall fiber-optic network resources. In order to solve this problem, a method adopted in the related art is on-site manual checking, but such manual checking still involves handwritten or paper-based records in many cases, failing to achieve a closed loop of resource data. In order to achieve a true closed loop of resources, it is necessary to be able to remotely, online, and dynamically acquire resource data, and automatically identify data that needs to be updated and calibrated. Among these resource data, the most difficult and important aspect is the connection relationship between the two ends of the access section optical fiber, that is, which branch link an ONU is connected to.

Aiming at the problem in the related art of how to identify which branch link an ONU is connected to, no solution has been proposed.

### Summary

The embodiments of the present invention provide a method and an apparatus for determining an optical splitter port connected to an optical network unit, so as to at least solve the problem in the related art of how to identify which branch link an ONU is connected to.

According to an embodiment of the present invention, provided is a method for determining an optical splitter port connected to an optical network unit, performed by an optical line terminal (OLT). The method includes:
a plurality of probe optical signals having different wavelengths are sequentially sent, and a designated target optical network unit (ONU) is notified to send a Raman pump signal, wherein the probe optical signals are combined with a downlink service optical signal and then injected into a trunk optical fiber, and are blocked or enter an access optical fiber and a plurality of ONUs after being subjected to filtering by an optical filter at an optical splitter port of a distribution optical fiber, and a Raman effect is generated between the probe optical signals which enter the ONUs via the optical filter and the Raman pump signal;
optical signal powers of characteristic signals corresponding to the plurality of probe optical signals are sequentially received, wherein one probe optical signal corresponds to one optical signal power;
optical filtering characteristics of an optical splitter port are determined according to the power change characteristics of the optical signal powers; and
the optical splitter port connected to the target ONU is determined according to the optical filtering characteristics of the optical splitter port, wherein the target ONU is one of the plurality of ONUs.

According to another embodiment of the present invention, further provided is a method for determining an optical splitter port connected to an optical network unit, performed by an optical network unit (ONU). The method includes:
a plurality of probe optical signals having different wavelengths which are sequentially sent by an optical line terminal (OLT) are received, wherein the probe optical signals are combined with a downlink service optical signal and then injected into a trunk optical fiber, and are blocked or enter an access optical fiber and a plurality of ONUs after being subjected to filtering by an optical filter at an optical splitter port of a distribution optical fiber, and a Raman effect is generated between the probe optical signals which enter the ONUs via the optical filter and a Raman pump signal;
the Raman pump signal is sent on the basis of a notification of the OLT, such that the OLT sequentially receives optical signal powers of characteristic signals corresponding to the plurality of probe optical signals, optical filtering characteristics of an optical splitter port are determined according to the power change characteristics of the optical signal powers, and the optical splitter port connected to a target ONU is determined according to the optical filtering characteristics of the optical splitter port, wherein one probe optical signal corresponds to one optical signal power, and the target ONU is one of the plurality of ONUs; or
the Raman pump signal is sent via the notification of the OLT, probe optical signal powers corresponding to the plurality of probe optical signals are sequentially received, optical filtering characteristics of an optical splitter port are determined according to the power change characteristics of the optical signal powers, and the optical splitter port connected to the target ONU is determined according to the optical filtering characteristics of the optical splitter port.

According to another embodiment of the present invention, further provided is an apparatus for determining an optical splitter port connected to an optical network unit, applied to an optical line terminal (OLT). The apparatus includes:
a first sending module, configured to sequentially send a plurality of probe optical signals having different wavelengths, and notify a designated target optical network unit (ONU) to send a Raman pump signal, wherein the probe optical signals are combined with a downlink service optical signal and then injected into a trunk optical fiber, and are blocked or enter an access optical fiber and a plurality of ONUs after being subjected to filtering by an optical filter at an optical splitter port of a distribution optical fiber, a Raman effect is generated between the probe optical signals which enter the ONUs via the optical filter and the Raman pump signal, and the target ONU is one of the plurality of ONUs;
a first power receiving module, configured to sequentially receive optical signal powers of characteristic signals corresponding to the plurality of probe optical signals, wherein one probe optical signal corresponds to one optical signal power;
a first determination module, configured to determine optical filtering characteristics of an optical splitter port according to the power change characteristics of the optical signal powers; and
a second determination module, configured to determine the optical splitter port connected to the target ONU according to the optical filtering characteristics of the optical splitter port.

According to another embodiment of the present invention, further provided is an apparatus for determining an optical splitter port connected to a network unit, applied to an optical network unit (ONU). The apparatus includes:
a second power receiving module, configured to receive a plurality of probe optical signals having different wavelengths which are sequentially sent by an optical line terminal (OLT), wherein the probe optical signals are combined with a downlink service optical signal and then injected into a trunk optical fiber, and are blocked or enter an access optical fiber and a plurality of ONUs after being subjected to filtering by an optical filter at an optical splitter port of a distribution optical fiber, and a Raman effect is generated between the probe optical signals which enter the ONUs via the optical filter and a Raman pump signal;
a second sending module, configured to send the Raman pump signal on the basis of a notification of the OLT, such that the OLT sequentially receives optical signal powers of characteristic signals corresponding to the plurality of probe optical signals, determine optical filtering characteristics of an optical splitter port according to the power change characteristics of the optical signal powers, and determine the optical splitter port connected to a target ONU according to the optical filtering characteristics of the optical splitter port, wherein one probe optical signal corresponds to one optical signal power, and the target ONU is one of the plurality of ONUs; or
a third determination module, configured to send the Raman pump signal via the notification of the OLT, sequentially receive probe optical signal powers corresponding to the plurality of probe optical signals, determine optical filtering characteristics of an optical splitter port according to the power change characteristics of the optical signal powers, and determine the optical splitter port connected to the target ONU according to the optical filtering characteristics of the optical splitter port.

### Brief Description of the Drawings

Fig. 1 is a flowchart I of a method for determining an optical splitter port connected to an optical network unit according to an embodiment of the present invention;
Fig. 2 is a flowchart II of a method for determining an optical splitter port connected to an optical network unit according to an embodiment of the present invention;
Fig. 3 is a schematic diagram of a Raman gain spectrum according to an embodiment of the present invention;
Fig. 4 is a system block diagram of port identification by receiving uplink service frequency optical signal powers at an OLT side according to an embodiment of the present invention;
Fig. 5 is a block diagram of OLT composition according to an embodiment of the present invention;
Fig. 6 is a block diagram of ONU composition according to an embodiment of the present invention;
Fig. 7 is a schematic diagram I of probe optical signal emission according to an embodiment of the present invention;
Fig. 8 is a schematic diagram II of probe optical signal emission according to an embodiment of the present invention;
Fig. 9 is a schematic diagram III of probe optical signal emission according to an embodiment of the present invention;
Fig. 10 is a block diagram of an OLT side probe unit receiving backscattered optical signal powers for port identification according to an embodiment of the present invention;
Fig. 11 is a block diagram of an ONU receiving probe optical signals for port identification according to an embodiment of the present invention;
Fig. 12 is a schematic structural diagram of an ONU with an added probe optical receiving module according to an embodiment of the present invention;
Fig. 13 is a block diagram of an ONU device with an added third wavelength pump source according to an embodiment of the present invention;
Fig. 14 is a block diagram of an OLT device according to an optional embodiment of the present invention;
Fig. 15 is a system block diagram I of port identification according to an optional embodiment of the present invention;
Fig. 16 is a system block diagram II of port identification according to an optional embodiment of the present invention;
Fig. 17 is a system block diagram III of port identification according to an optional embodiment of the present invention;
Fig. 18 is a block diagram of optical network unit module composition according to an embodiment of the present invention;
Fig. 19 is a system block diagram IV of port identification according to an optional embodiment of the present invention;
Fig. 20 is a block diagram I of an apparatus for determining an optical splitter port connected to an optical network unit according to an embodiment of the present invention;
Fig. 21 is a block diagram II of an apparatus for determining an optical splitter port connected to an optical network unit according to an embodiment of the present invention.

### Detailed Description of the Embodiments

The embodiments of the present invention will be described below in detail with reference to the drawings and in conjunction with the embodiments.

It should be noted that, terms such as "first" and "second" in the description and the claims of the present invention and the described drawings are used to distinguish similar objects, but are not necessarily used to describe a specific sequence or order.

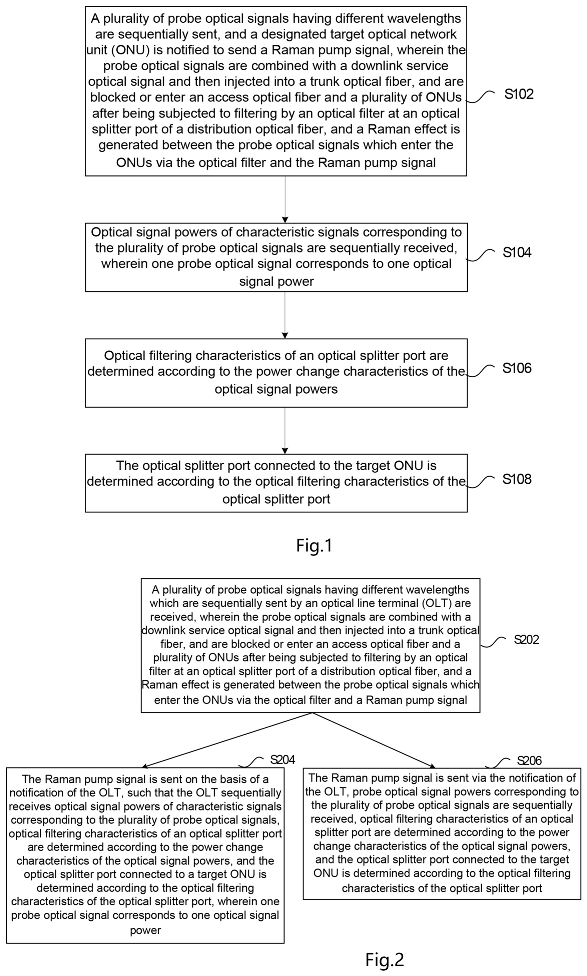

The present embodiment provides a method for determining an optical splitter port connected to an optical network unit. Fig. 1 is a flowchart I of a method for determining an optical splitter port connected to an optical network unit according to an embodiment of the present invention. As shown in Fig. 1, the method is applied to an OLT. The flow includes the following steps:
step S102: a plurality of probe optical signals having different wavelengths are sequentially sent, and a designated target optical network unit (ONU) is notified to send a Raman pump signal, wherein the probe optical signals are combined with a downlink service optical signal and then injected into a trunk optical fiber, and are blocked or enter an access optical fiber and a plurality of ONUs after being subjected to filtering by an optical filter at an optical splitter port of a distribution optical fiber, and a Raman effect is generated between the probe optical signals which enter the ONUs via the optical filter and the Raman pump signal.

In the present embodiment, the ONU has completed a normal registration process, each port of the optical splitter is preset with an optical filter, and the optical filter makes an optical frequency selection, and is required to ensure that the characteristics of the optical frequency signals allowed to pass through (or blocked) are different when reaching the access section optical fiber from different stages of optical splitter ports.

After the plurality of probe optical signals pass through the optical filter at each optical splitter port, the plurality of probe optical signals are allowed to pass through (or blocked) to enter the access section optical fiber according to the design of the preset optical filters. The probe optical signals selected to enter the access section optical fiber produce a Raman effect under the action of the Raman pump source optical signal, that is, the energy transfer of the signals occurs: a part of the energy of the Raman pump source is transferred to the probe optical signals, such that the powers of the probe optical signals and the backscattered signals of the probe optical signals are enhanced, and meanwhile the power of the Raman pump source is reduced. The system receives and analyzes the pump source optical signal powers or the probe optical signal powers or the backscattered signal powers of the probe optical signals via a receiving module.
Step S104: optical signal powers of characteristic signals corresponding to the plurality of probe optical signals are sequentially received, wherein one probe optical signal corresponds to one optical signal power;
step S106: optical filtering characteristics of an optical splitter port are determined according to the power change characteristics of the optical signal powers; and
step S108: the optical splitter port connected to the target ONU is determined according to the optical filtering characteristics of the optical splitter port, wherein the target ONU is one of the plurality of ONUs.

By means of steps S102 to S108, the present invention can solve the problem in the related art of how to identify which branch link an ONU is connected to, and can identify a port of each stage of optical splitter that the ONU is connected to, such that the connection situation of an optical fiber link from an OLT to each ONU can be determined.

In the present embodiment, step S108 may specifically include:
S1081: the optical filtering characteristics of the optical splitter port are compared with preset optical filter characteristics of each optical splitter port.

Further, step S1081 may specifically include: in a case where the receiving module is a receiver of the OLT, the optical filtering characteristics of the optical splitter port are compared with preset optical filter characteristics of each optical splitter port; and in a case where the receiving module is a receiver of the probe processing unit or a third wavelength receiver added in the OLT, the optical filtering characteristics of the optical splitter port are compared with preset optical filter characteristics of each optical splitter port by the probe processing unit.

S1082: the optical splitter port with a comparison result indicating the same optical filtering characteristics is determined as the optical splitter port connected to the target ONU.

In the present embodiment, the step S102 may specifically include: a preset probe processing unit is notified to sequentially send the plurality of probe optical signals.

The probe processing unit in the present embodiment is a board/card device of the OLT or a device independent of the OLT; or the probe processing unit is provided at an input port side of the optical splitter.

In the present embodiment, the step S104 may specifically include: the characteristic signals are Raman pump optical signals, backscattered signals or probe optical signals; Raman pump optical signal powers or backscattered signal powers of the probe optical signals are received by a receiving module; furthermore, in a case where the receiving module is the receiver of the OLT, Raman pump optical signal powers sent by an uplink service sending source of the target ONU are received by the receiver of the OLT; in a case where the receiving module is the receiver of the probe processing unit, Raman pump optical signal powers or backscattered signal powers of the probe optical signals sent by a third wavelength optical signal source added in the target ONU are received by the receiver of the probe processing unit; and in a case where the receiving module is the third wavelength receiver added in the OLT, Raman pump optical signal powers sent by the third wavelength optical signal source added in the ONU are received by the third wavelength receiver added in the OLT; or probe optical signal powers sent by the target ONU via an uplink service channel are received by the receiving module; wherein the optical signal powers are one of the following: the Raman pump optical signal powers, the backscattered signal powers and the probe optical signal powers.

In the present embodiment, the receiving module is one of the following: a receiver of the OLT, a receiver of the probe processing unit, and a third wavelength receiver added in the OLT, wherein the third wavelength is a non-service wavelength.

When the receiving module is an OLT device receiver, the receiving module is configured to receive the Raman pump optical signal powers sent by the ONU uplink service sending source. Each time a probe light is sent, a Raman pump source optical signal power is received, and the OLT device compares and analyzes the received powers, and classifies the received powers into a higher power class and a lower power class.

A higher power indicates that the correspondingly sent probe optical signal is blocked by the optical filter from entering the access section optical fiber, while a lower power indicates that the correspondingly sent probe optical signal is selected by the optical filter to enter the access section optical fiber. Then a comparison is made with the characteristics of an optical filter preset for each stage of branch link, and the branch link that matches the wavelength filtering characteristics obtained from the test of the plurality of probe optical signals is identified as the branch link to which the specified ONU is connected via the access section optical fiber.

When the receiving module is a receiver module of the probe processing unit, the receiving module is configured to receive the Raman pump optical signal powers sent by the third wavelength optical signal source added at the ONU side. Each time a probe light is sent, a Raman pump source optical signal power is received, and the probe processing unit compares and analyzes the received powers, and classifies the received powers into a higher power class and a lower power class. A higher power indicates that the correspondingly sent probe optical signal is blocked by the optical filter from entering the access section optical fiber, while a lower power indicates that the correspondingly sent probe optical signal is selected by the optical filter to enter the access section optical fiber. Then a comparison is made with the characteristics of an optical filter preset for each stage of branch link, and the branch link that matches the wavelength filtering characteristics obtained from the test of the plurality of probe optical signals is identified as the branch link to which the specified ONU is connected via the access section optical fiber.

When the receiving module is a third wavelength receiver module added in the OLT device, the receiving module is configured to receive the Raman pump optical signal powers sent by the third wavelength optical signal source added at the ONU side. Each time a probe light is sent, a Raman pump source optical signal power is received, and the probe processing unit compares and analyzes the received powers, and classifies the received powers into a higher power class and a lower power class. A higher power indicates that the correspondingly sent probe optical signal is blocked by the optical filter from entering the access section optical fiber, while a lower power indicates that the correspondingly sent probe optical signal is selected by the optical filter to enter the access section optical fiber. Then a comparison is made with the characteristics of an optical filter preset for each stage of branch link, and the branch link that matches the wavelength filtering characteristics obtained from the test of the plurality of probe optical signals is identified as the branch link to which the specified ONU is connected via the access section optical fiber.

When the receiving module is a receiver of the probe processing unit, the receiving module is configured to receive OTDR signal powers of the probe frequency optical signals. Each time a probe light is sent, an OTDR signal power is received, and the probe processing unit compares and analyzes the received powers, and classifies the received powers into a higher power class and a lower power class. A higher power indicates that the correspondingly sent probe optical signal is selected by the optical filter to enter the access section optical fiber, while a lower power indicates that the correspondingly sent probe optical signal is blocked by the optical filter from entering the access section optical fiber. Then a comparison is made with the characteristics of an optical filter preset for each stage of branch link, and the branch link that matches the wavelength filtering characteristics obtained from the test of the plurality of probe optical signals is identified as the branch link to which the specified ONU is connected via the access section optical fiber.

When the receiving module is a probe optical receiving module added in the ONU side device, the receiving module is configured to receive the probe optical signal powers sent by the probe processing unit. Each time a probe light is sent, a probe optical signal power is received, and the ONU side device compares and analyzes the received powers, and classifies the received powers into a higher power class and a lower power class. A higher power indicates that the correspondingly sent probe optical signal is selected by the optical filter to enter the access section optical fiber, while a lower power indicates that the correspondingly sent probe optical signal is blocked by the optical filter from entering the access section optical fiber. Then a comparison is made with the characteristics of an optical filter preset for each stage of branch link, and the branch link that matches the wavelength filtering characteristics obtained from the test of the plurality of probe optical signals is identified as the branch link to which the specified ONU is connected via the access section optical fiber.

In an embodiment, before the step that the optical filtering characteristics of the optical splitter port are compared with preset optical filter characteristics of each optical splitter port, the method further includes: in a case where the receiving module is the receiver of the OLT, the Raman pump optical signal powers corresponding to the plurality of probe optical signals are compared and classified to obtain a first power class and a second power class, wherein the power of the first power class is greater than the power of the second power class, the probe optical signals corresponding to the first power class are blocked from entering the access optical fiber by the optical filter, and the probe optical signals corresponding to the second power class are allowed to enter the access optical fiber by the optical filter; and in a case where the receiving module is the receiver of the probe processing unit or the third wavelength receiver added in the OLT, the Raman pump optical signal powers or the backscattered signal powers corresponding to the plurality of probe optical signals are compared and classified by the probe processing unit to obtain the first power class and the second power class; furthermore, difference processing is respectively performed on the backscattered signal powers corresponding to the plurality of probe optical signals and initial backscattered signal powers corresponding to the plurality of probe optical signals, so as to obtain a plurality of differences; and the plurality of differences are classified to obtain the first power class and the second power class; wherein the power change characteristics are determined on the basis of the first power class and the second power class.

In an embodiment, before step S102, the method further includes: the probe processing unit is notified to sequentially send the plurality of probe optical signals; initial backscattered signal powers corresponding to the plurality of probe optical signals are received by the probe processing unit; and the probe processing unit is notified to stop sending the probe optical signals.

In the present embodiment, the plurality of ONUs simultaneously support a plurality of standards, and the target ONU sends the Raman pump optical signal via an uplink service sending source of a target standard which is currently in an idle state among the plurality of standards, such as GPON and 10GPON. The Raman pump signal has a third wavelength, wherein the third wavelength is a non-service wavelength; or the wavelength of the Raman pump optical signal is the same as the wavelength of a service optical signal.

The OLT instructs Raman pump optical signal source of the ONU device side to send a Raman pump optical signal, and notifies at the same time the probe processing unit to send a plurality of (at least two) probe optical signals having different wavelengths.

The frequencies of the probe optical signals and the Raman pump optical signals need to satisfy the requirements of the Raman gain spectrum. The Raman pump optical signal source uses an ONU uplink service sending source to send a Raman pump optical signal.

Optionally, an optical signal source of a third wavelength (non-service wavelength) is added at the ONU side to send a Raman pump optical signal, for example, a pump optical source of 1550 nm. The present embodiment does not limit the specific standard of the PON system. The OLT may support GPON or 10GPON or a Combo PON, and the ONU may also support GPON or 10GPON or support both standards.

The embodiments of the present invention further provide a method for determining an optical splitter port connected to an optical network unit. Fig. 2 is a flowchart II of a method for determining an optical splitter port connected to an optical network unit according to an embodiment of the present invention. As shown in Fig. 2, the method is applied to an ONU. The flow includes the following steps:
step S202: a plurality of probe optical signals having different wavelengths which are sequentially sent by an optical line terminal (OLT) are received, wherein the probe optical signals are combined with a downlink service optical signal and then injected into a trunk optical fiber, and are blocked or enter an access optical fiber and a plurality of ONUs after being subjected to filtering by an optical filter at an optical splitter port of a distribution optical fiber, and a Raman effect is generated between the probe optical signals which enter the ONUs via the optical filter and a Raman pump signal;
step S204: the Raman pump signal is sent on the basis of a notification of the OLT, such that the OLT sequentially receives optical signal powers of characteristic signals corresponding to the plurality of probe optical signals, optical filtering characteristics of an optical splitter port are determined according to the power change characteristics of the optical signal powers, and the optical splitter port connected to a target ONU is determined according to the optical filtering characteristics of the optical splitter port, wherein one probe optical signal corresponds to one optical signal power, and the target ONU is one of the plurality of ONUs; or

In the present embodiment, step S204 may specifically include: in a case where the Raman pump signal has a third wavelength, the Raman pump signal is sent via an added third wavelength pump source on the basis of the notification of the OLT, wherein the third wavelength is a non-service wavelength; or in a case where the wavelength of the Raman pump optical signal is the same as the wavelength of a service optical signal, the Raman pump signal is sent via a pump source on the basis of the notification of the OLT.

Step S206: the Raman pump signal is sent via the notification of the OLT, probe optical signal powers corresponding to the plurality of probe optical signals are sequentially received, optical filtering characteristics of an optical splitter port are determined according to the power change characteristics of the optical signal powers, and the optical splitter port connected to the target ONU is determined according to the optical filtering characteristics of the optical splitter port.

By means of steps S202 to S206, the present invention can solve the problem in the related art of how to identify which branch link an ONU is connected to, and can identify a port of each stage of optical splitter that the ONU is connected to, such that the connection situation of an optical fiber link from an OLT to each ONU can be determined.

In an embodiment, in step S206, the operation that the optical splitter port connected to the target ONU is determined according to the optical filtering characteristics of the optical splitter port may specifically include: the optical filtering characteristics of the optical splitter port are compared with preset optical filter characteristics of each optical splitter port; and the optical splitter port with a comparison result indicating the same optical filtering characteristics is determined as the optical splitter port connected to the target ONU.

In another embodiment, in step S206, the operation that probe optical signal powers corresponding to the plurality of probe optical signals are sequentially received may specifically include: probe optical signal powers corresponding to the plurality of probe optical signals sent by the OLT via a probe processing unit are received by an added probe optical receiving module.

In the present embodiment, the optical signal powers are one of the following: Raman pump optical signal powers, backscattered signal powers and probe optical signal powers.

In the present embodiment, based on the principle of Raman gain, an optical fiber medium itself is used as a gain element, and a system does not need to additionally design an optical control power component (such as special doped optical fibers). By utilizing the Raman gain spectrum, the power change characteristics of the received probe optical signals, Raman pump optical signals, or probe light OTDR signals when a plurality of probe optical signals are sent can be realized. This enables the analysis of the filtering characteristics for different probe optical signals,' which are then compared with the optical filtering characteristics of each branch link, thereby achieving the purpose of identifying information of the specific branch link to which an ONU is connected.

Principle of Raman gain: a Raman amplifier operates on the basis of a stimulated Raman scattering effect, by transmitting pump light and weaker signal light simultaneously in a single optical fiber, the pump light undergoes oscillatory scattering with the optical fiber, resulting in the emission of light at a lower frequency, which is the frequency of the weaker signal light.

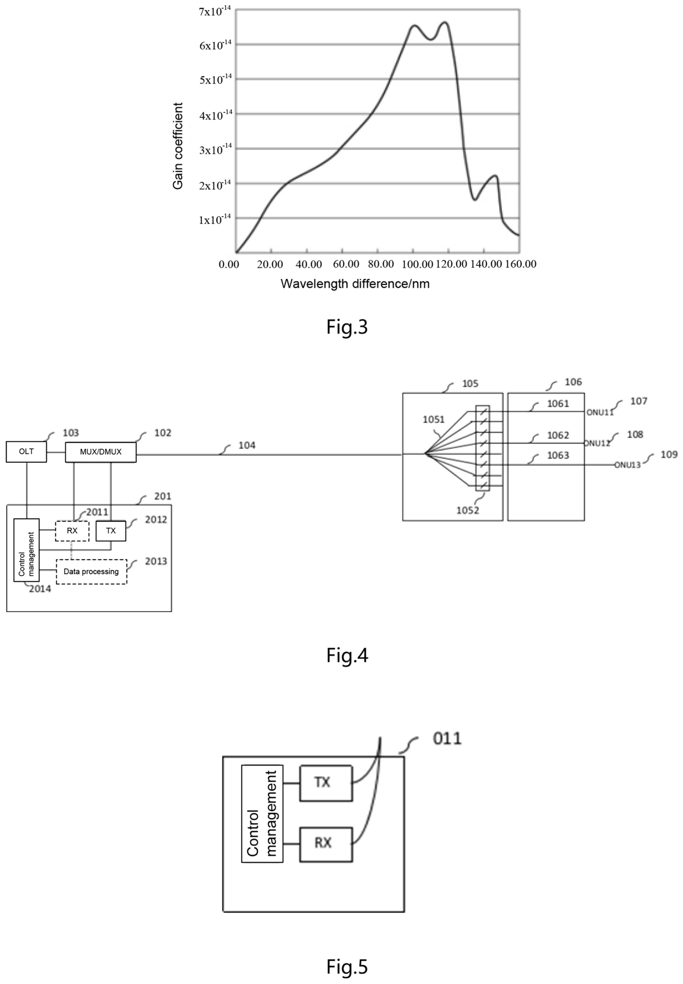

The Raman gain is linearly related to the wavelength difference between the pump light wavelength and the signal light (the probe light in the present embodiment) wavelength. Fig. 3 is a schematic diagram of a Raman gain spectrum according to an embodiment of the present invention. As shown in Fig. 3, when the difference is approximately 100 nm, this growth reaches its peak. Generally, the Raman gain is linearly related to the difference when the wavelength difference between the pump light and the signal light (the probe light in the present embodiment) is within 100 nm, and then decreases rapidly as the difference value increases. It can be roughly obtained from the figure that an available gain bandwidth is approximately 48 nm.

According to the described principle, if it is desired to achieve a certain gain effect:
when the wavelength of the pump light is 1310+/-20 nm, the wavelength of the probe light may be designed to be in a range of 1370 nm to 1410 nm;
in a PON system, when the pump light wavelength is designed to be a third wavelength (i.e. a wavelength other than the service wavelength), the probe light wavelength is selected to be within a common C-band, and the optical wavelength of the pump source may be selected to be between 1440 nm and 1460 nm; and
the probe light wavelength is selected to be between 1625 nm and 1650 nm, and the optical wavelength of the pump source may be selected to be at 1550 nm.

An optical filter is used for making a wavelength selection, and may be divided into a band-pass/band-stop filter, a low-pass/high-pass filter, and the like according to frequency selection characteristics. The optical filter may be integrated with an optical splitter chip, and may also be connected in series to an output port of the optical splitter. The port optical filters in this proposal need to satisfy the following conditions: first, they must not interfere with the transmission of uplink and downlink service light frequencies; meanwhile, when a plurality of probe frequency light enter the distribution optical fiber from the trunk optical fiber and pass through the output ports with the optical filters of the optical filters in the distribution optical fiber network, regardless of how many stages of optical splitters there are in the intermediate distribution optical fiber, the characteristics of the probe frequency optical signals which pass through (or are blocked by) each port optical filter at each stage to each ONU side must be unique and non-repetitive. The following is only an example, and no limitation is imposed on the types of optical splitters, such as FBT or PLC, the number of ports included in each optical splitter, or the specific implementation technologies of the optical filters, which can be filter films, gratings, or the like.

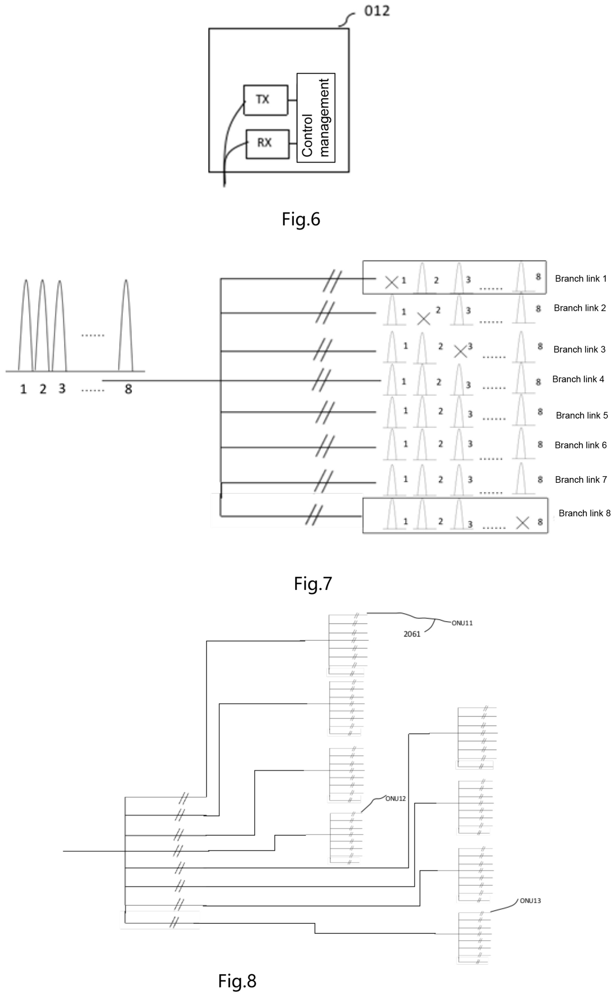

Fig. 4 is a system block diagram of port identification by receiving uplink service frequency optical signal powers at an OLT side according to an embodiment of the present invention. As shown in Fig. 4, a probe processing unit 201 mainly includes probe optical signal transmitter TX 2012, probe light OTDR optical signal receiver RX 2011, data processing 2013 and control management 2014, wherein RX 2011 and data processing 2013 are optional modules, and can receive and process backscattered signals of probe frequency optical signals.
combiner/splitter unit102, which is configured to perform combination and splitting processing on the probe frequency optical signals and the uplink and downlink service frequency optical signals;
optical line terminal (OLT) 103, Fig. 5 is a block diagram of OLT composition according to an embodiment of the present invention. As shown in Fig. 5, the OLT 103 includes a TX and an RX, wherein the TX is configured to send a downlink service optical signal; and the RX is configured to receive an uplink service optical signal;
trunk section optical fiber104;
distribution section optical fiber105, which mainly consists of: optical splitter 1051 and port optical filtering 1052;
access section optical fiber106, wherein 1061 refers to the access section optical fiber connected to ONU11, 1062 refers to the access section optical fiber connected to ONU12, and 1063 refers to the access section optical fiber connected to ONU13;
107/108/109 correspond to optical network units ONU11/ONU12/ONU13 with the same module structural design. Fig. 6 is a block diagram of ONU composition according to an embodiment of the present invention. As shown in Fig. 6, the ONU includes a TX and an RX, wherein the TX is configured to send an uplink service optical signal; and the RX is configured to receive a downlink service optical signal.

The implementation of a Raman pump source takes a GPON system as an example. ONU11/ONU12/ONU13 support the GPON standard for uplink transmission. For a specific implementation of the Raman pump source, reference can be made to EP 3 869 709 A1. An ONU structure shown in Fig. 6 is designed to send a Raman pump optical signal in an idle time slot. In the GPON system, an uplink service optical signal has a wavelength of 1310 nm. The Raman pump optical signal sent by the pump source has a wavelength same as the wavelength of a service optical signal, and is sent by the TX module shown in Fig. 6.

Fig. 7 is a schematic diagram I of probe optical signal emission according to an embodiment of the present invention. As shown in Fig. 7, 1-8 probe optical frequency signals are input. In branch link 1 (ONU1), frequency 1 is blocked while frequencies 2-8 are allowed to pass. In branch link 2 (ONU2), frequency 2 is allowed to pass while frequencies 1 and 3-8 are blocked. This pattern continues until branch link 8 (ONU8) where frequency 8 is blocked while frequencies 1-7 are allowed to pass. Alternatively, a reverse design may be adopted. For example, 1-8 probe optical frequency signals are input. In branch link 1, frequency 1 is allowed to pass while frequencies 2-8 are blocked. In branch link 2, frequency 2 is allowed to pass while frequencies 1 and 3-8 are blocked. This pattern continues until branch link 8 where frequency 8 is allowed to pass while frequencies 1-7 are blocked, as shown in Table 1, where × denotes blocked, and √ denotes allowed to pass.

**Table 1**

| optical frequency | 1 | 2 | 3 | 4 | 5 | 6 | 7 | 8 |
|---|---|---|---|---|---|---|---|---|
| branch link 1 | × | √ | √ | √ | √ | √ | √ | √ |
| branch link 2 | √ | × | √ | √ | √ | √ | √ | √ |
| branch link 3 | √ | √ | × | √ | √ | √ | √ | √ |
| branch link 4 | √ | √ | √ | × | √ | √ | √ | √ |
| branch link 5 | √ | √ | √ | √ | × | √ | √ | √ |
| branch link 6 | √ | √ | √ | √ | √ | × | √ | √ |
| branch link 7 | √ | √ | √ | √ | √ | √ | × | √ |
| branch link 8 | √ | √ | √ | √ | √ | √ | √ | × |

I. The distribution section optical fiber 105 and the port optical filter 1052 are designed according to Fig. 7 and Table 1. According to the Raman amplification gain spectrum in Fig. 3, the probe optical signals can be selected within a 48 nm bandwidth range. For example, 8 different probe optical signal wavelengths are selected at a wavelength interval of 5 nm between 1360 nm and 1400 nm, which are sequentially sent by the TX module 2012 of the probe processing unit in Fig. 4. The distribution section optical fiber is connected to ONU12 108 via the access section optical fiber 1062.

An OLT 103 notifies a management control module 2014 of a probe processing unit 201. The module notifies, according to an instruction, a TX module 2012 of the probe processing unit 201 to sequentially send eight different probe optical signals. At the same time, the OLT 103 issues a signal instruction to ONU12 108 to notify same to send Raman pump optical signals. The RX of OLT 102 as shown in Fig. 5 gets ready to receive powers of the corresponding 8 pump optical signals. When 1-8 probe optical signals sequentially pass through the distribution section optical fiber 105, they are blocked or pass through to enter the access fiber 1062 connected to the ONU12 108 via the optical filter design shown in Fig. 7.

When probe optical signal 1 is sent, the RX module of OLT 103 will receive pump optical signal PL1, and when probe optical signal 2 is sent, the RX module of OLT 103 will receive pump optical signal PL2. This continues in sequence until probe optical signal 8 is sent, at which point the RX module of OLT 103 will receive pump optical signal PL8. As shown in Table 2, the TX module 2012 of the probe processing unit 201 sequentially sends probe optical signals 1-8, and the RX module of OLT 103 sequentially receives pump optical powers PL1-PL8.

Upon completion of the transmission of the 1-8 probe optical signals, the probe processing unit 201 notifies the OLT 103, and at this time, the OLT 103 issues a signal instruction to the ONU12 108 to notify same to stop sending Raman pump optical signals.

The OLT 103 sequentially compares the pump optical signal powers PL1-PL8 corresponding to the received probe optical signals 1-8, and obtains the result as shown in the third row in Table 2. The power value received when the probe optical signal 4 is sent is a higher power, and the power values corresponding to all the other 7 probe optical signals are smaller values. According to the principle of Raman gain, in the process of sending the pump optical signals by the ONU12 108, the probe optical signals which enter the access optical fiber section will be amplified and the energy of the pump optical signals will be reduced, and the probe optical signals which do not enter the access optical fiber section will not undergo energy transfer and the energy of the pump optical signals will not be reduced. The received pump optical signal powers are analyzed. Because PL4 is a higher power, it can be obtained that the probe optical signal 4 is blocked by the optical filter from entering the access section optical fiber 1062 connected to the ONU12 108, and the other 7 probe optical signals are selected by the optical filter to enter the access section optical fiber 1062 connected to the ONU12 108.

**Table 2**

| probe optical signal | 1 | 2 | 3 | 4 | 5 | 6 | 7 | 8 |
|---|---|---|---|---|---|---|---|---|
| the received pump optical signal power when the ONU11 sends the Raman pump light | PL1 | PL2 | PL3 | PL4 | PL5 | PL6 | PL7 | PL8 |
| comparative analysis | lower | lower | lower | higher | lower | lower | lower | lower |
| | pass | pass | pass | block | pass | pass | pass | pass |

Finally, by comparing the obtained results with the port optical filter 1052 designed according to Fig. 7 and Table 1, it is found that the optical filter characteristics match those designed for branch link 4. Thus, it is determined that the optical splitter port connected to the ONU12 108 is optical splitter port 4.

II. The distribution section optical fiber 105 and the port optical filter 1052 are designed according to Fig. 8 and Table 3. According to the Raman amplification gain spectrum in Fig. 3, Fig. 8 is a schematic diagram II of probe optical signal emission according to an embodiment of the present invention. As shown in Fig. 8, the probe optical signals can be selected within a 48 nm bandwidth range. For example, 64 different probe optical signal wavelengths are selected at a wavelength interval of 0.5 nm between 1360 nm and 1400 nm, which are sequentially sent by the TX module 2012 of the probe processing unit in Fig. 4. The distribution section optical fiber is connected to ONU11 107 via the access section optical fiber 2061.

**Table 3**

| optical frequency | 1 | ... | 8 | 9 | ... | 1 6 | 1 7 | ... | 2 5 | ... | 3 3 | ... | 4 1 | ... | 4 9 | ... | 5 7 | ... | 6 4 |
|---|---|---|---|---|---|---|---|---|---|---|---|---|---|---|---|---|---|---|---|
| branch link 1 | √ | × | × | × | × | × | × | × | × | × | × | × | × | × | × | × | × | × | × |
| branch link 2 | × | × | × | √ | × | × | × | × | × | × | × | × | × | × | × | × | × | × | × |
| branch link 3 | × | × | × | × | × | × | √ | × | × | × | × | × | × | × | × | × | × | × | × |
| branch link 4 | × | × | × | × | × | × | × | × | √ | × | × | × | × | × | × | × | × | × | × |
| branch link 5 | × | × | × | × | × | × | × | × | × | × | √ | × | × | × | × | × | × | × | × |
| branch link 6 | × | × | × | × | × | × | × | × | × | × | × | × | √ | × | × | × | × | × | × |
| branch link 7 | × | × | × | × | × | × | × | × | × | × | × | × | × | × | √ | × | × | × | × |
| branch link 8 | × | × | × | × | × | × | × | × | × | × | × | × | × | × | × | × | √ | × | × |

An OLT 103 notifies a management control module 2014 of a probe processing unit 201. The module notifies, according to an instruction, a TX module 2012 of the probe processing unit 201 to sequentially send 64 different probe optical signals. At the same time, the OLT 103 issues a signal instruction to ONU11 107 to notify same to send Raman pump optical signals. The RX of OLT 102 as shown in Fig. 5 gets ready to receive powers of the corresponding 8 pump optical signals. When 1-64 probe optical signals sequentially pass through the distribution section optical fiber 105, they are blocked or pass through to enter the access fiber 2061 connected to the ONU11 107 via the optical filter design shown in Fig. 8.

When probe optical signal 1 is sent, the RX module of OLT 103 will receive pump optical signal PL1, and when probe optical signal 2 is sent, the RX module of OLT 103 will receive pump optical signal PL2. This continues in sequence until probe optical signal 64 is sent, at which point the RX module of OLT 103 will receive pump optical signal PL64. As shown in Table 4, the TX module 2012 of the probe processing unit 201 sequentially sends probe optical signals 1-64, and the RX module of OLT 103 sequentially receives pump optical powers PL1-PL64.

Upon completion of the transmission of the 1-64 probe optical signals, the probe processing unit 201 notifies the OLT 103, and at this time, the OLT 103 issues a signal instruction to the ONU11 107 to notify same to stop sending Raman pump optical signals.

The OLT 103 sequentially compares the pump optical signal powers PL1-PL64 corresponding to the received probe optical signals 1-64, and obtains the result as shown in the third row in Table 2. The power value received when the probe optical signal 1 is sent is a lower power, and the power values corresponding to all the other 63 probe optical signals are larger values. According to the principle of Raman gain, in the process of sending the pump optical signals by the ONU11 107, the probe optical signals which enter the access optical fiber section will be amplified and the energy of the pump optical signals will be reduced, and the probe optical signals which do not enter the access optical fiber section will not undergo energy transfer and the energy of the pump optical signals will not be reduced. The received pump optical signal powers are analyzed. Because PL1 is a lower power, it can be obtained that the probe optical signal 1 is selected by the optical filter to enter the access section optical fiber 2061 connected to the ONU11 107, and the other 63 probe optical signals are blocked by the optical filter from entering the access section optical fiber 2061 connected to the ONU11 107.

**Table 4**

| probe optical signal | **1** | 2 | 3 | 4 | ... | 62 | 63 | 64 |
|---|---|---|---|---|---|---|---|---|
| the received pump optical signal power when the ONU11 sends the Raman pump light | **PL1** | PL2 | PL3 | PL4 | ... | PL62 | PL63 | L64 |
| comparative analysis | **lower** | higher | higher | higher | higher | higher | higher | higher |
| | **pass** | block | block | block | block | block | block | block |

Finally, by comparing the obtained results with the port optical filter 1052 designed according to Fig. 8 and Table 3, it is found that the optical filter characteristics match those designed for branch link 1. Thus, it is determined that the optical splitter ports connected to the ONU11 107 are: first-stage optical splitter port 1 and second-stage optical splitter port 1.

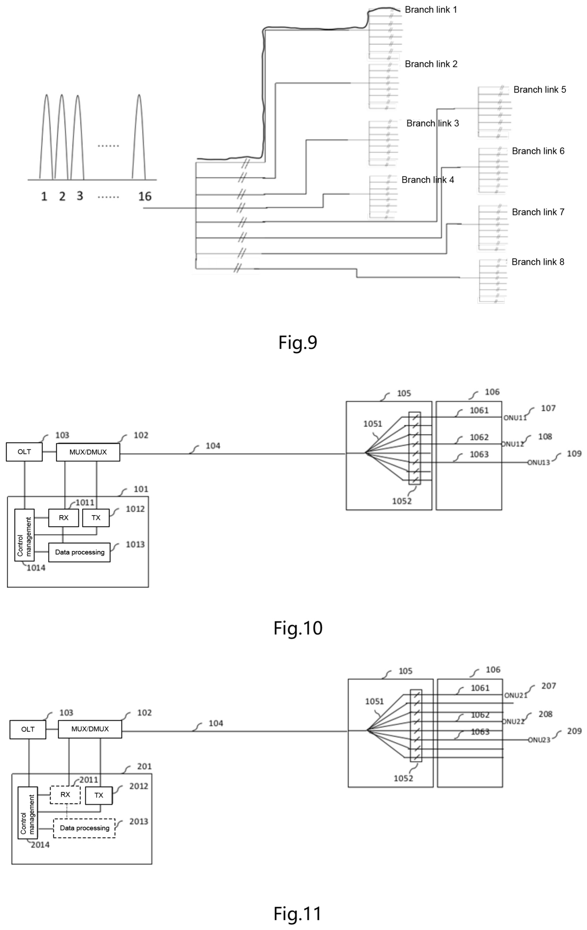

III. The distribution section optical fiber 105 and the port optical filter 1052 are designed according to Fig. 9 and Table 5. According to the Raman amplification gain spectrum in Fig. 4, the probe optical signals can be selected within a 48 nm bandwidth range. For example, 16 different probe optical signal wavelengths are selected at a wavelength interval of 2 nm between 1360 nm and 1400 nm. Fig. 9 is a schematic diagram III of probe optical signal emission according to an embodiment of the present invention. The probe optical signals are sequentially sent by the TX module 2012 of the probe processing unit in Fig. 9.

**Table 5**

| optical frequency | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| branch link 1 | × | √ | √ | *√* | √ | *√* | *√* | √ | × | √ | √ | *√* | *√* | *√* | *√* | *√* |
| branch link 2 | √ | × | √ | √ | √ | *√* | *√* | √ | *√* | × | √ | √ | *√* | *√* | *√* | *√* |
| branch link 3 | √ | *√* | × | √ | √ | *√* | *√* | √ | *√* | √ | × | √ | √ | *√* | *√* | *√* |
| branch link 4 | √ | *√* | *√* | × | √ | √ | *√* | √ | *√* | √ | √ | × | √ | √ | *√* | *√* |
| branch link 5 | √ | √ | *√* | *√* | × | √ | √ | √ | *√* | √ | √ | *√* | × | √ | √ | *√* |
| branch link 6 | √ | √ | *√* | *√* | √ | × | √ | √ | *√* | √ | √ | *√* | *√* | × | √ | √ |
| branch link 7 | √ | √ | *√* | *√* | √ | *√* | × | √ | √ | √ | √ | *√* | *√* | *√* | × | √ |
| branch link 8 | √ | √ | √ | √ | √ | √ | √ | × | √ | √ | √ | √ | √ | √ | √ | × |

An OLT 103 notifies a management control module 2014 of a probe processing unit 201. The module notifies, according to an instruction, a TX module 2012 of the probe processing unit 201 to sequentially send 16 different probe optical signals. At the same time, the OLT 103 issues a signal instruction to ONU11 107 to notify same to send Raman pump optical signals. The RX of OLT 102 as shown in Fig. 5 gets ready to receive powers of the corresponding 8 pump optical signals. When 1-16 probe optical signals sequentially pass through the distribution section optical fiber 105, they are blocked or pass through to enter the access fiber 2061 connected to the ONU11 107 via the optical filter design shown in Fig. 9.

When probe optical signal 1 is sent, the RX module of OLT 103 will receive pump optical signal PL1, and when probe optical signal 2 is sent, the RX module of OLT 103 will receive pump optical signal PL2. This continues in sequence until probe optical signal 16 is sent, at which point the RX module of OLT 103 will receive pump optical signal PL16. As shown in Table 6, the TX module 2012 of the probe processing unit 201 sequentially sends probe optical signals 1-16, and the RX module of OLT 103 sequentially receives pump optical powers PL1-PL16.

Upon completion of the transmission of the 1-16 probe optical signals, the probe processing unit 201 notifies the OLT 103, and at this time, the OLT 103 issues a signal instruction to the ONU11 107 to notify same to stop sending Raman pump optical signals.

The OLT 103 sequentially compares the pump optical signal powers PL1-PL16 corresponding to the received probe optical signals 1-16, and obtains the result as shown in the third row in Table 5. The power value received when the probe optical signal 1 is sent is a higher power PL1, the power value received when the probe optical signal 9 is sent is a higher power PL9, and the power values corresponding to all the other 14 probe optical signals are smaller values. According to the principle of Raman gain, in the process of sending the pump optical signals by the ONU11 107, the probe optical signals which enter the access optical fiber section will be amplified and the energy of the pump optical signals will be reduced, and the probe optical signals which do not enter the access optical fiber section will not undergo energy transfer and the energy of the pump optical signals will not be reduced. The received pump optical signal powers are analyzed. Because PL1/PL9 is a higher power, it can be obtained that the probe optical signal 1 and the probe optical signal 9 are blocked by the optical filter from entering the access section optical fiber 2061 connected to the ONU11 107, and the other 14 probe optical signals are selected by the optical filter to enter the access section optical fiber 2061 connected to the ONU11 107.

**Table 6**

| probe optical signal | 1 | 2 | 3 | 4 | ... | 9 | 10 | ... | 15 | 16 |
|---|---|---|---|---|---|---|---|---|---|---|
| the received pump optical signal power when the ONU11 sends the Raman pump light | PL1 | PL2 | PL3 | PL4 | ... | PL9 | PL10 | ... | PL15 | L16 |
| comparative analysis | higher | lower | lower | lower | ... | higher | lower | lower | lower | lower |
| | block | pass | pass | pass | ... | block | pass | pass | pass | pass |

Finally, by comparing the obtained results with the port optical filter 1052 designed according to Fig. 9 and Table 5, it is found that the optical filter characteristics match those designed for branch link 1. Thus, it is determined that the optical splitter ports connected to the ONU12 108 are: first-stage optical splitter port 1 and second-stage optical splitter port 1.

In the described system shown in Fig. 4, a distribution optical fiber section may have one stage or multiple stages of optical splitters. The optical splitter ports do not require the design of optical power control components. By combining this with the design of optical filtering (ensuring the uniqueness of the optical frequency characteristics entering each access section optical fiber), it is possible to identify the specific branch link to which an ONU device is connected, that is, the port of each stage of optical splitter to which it is connected.

The Probe processing unit of the OLT side receives backscattered optical signal powers for port identification. Fig. 10 is a block diagram of an OLT side probe unit receiving backscattered optical signal powers for port identification according to an embodiment of the present invention. As shown in Fig. 10, the probe processing unit 101 mainly includes probe frequency optical signal transmitter TX 1012, probe light backscattered optical signal receiver RX 1011, data processing 1013 and control management 1014;
combiner/splitter unit102, which is configured to perform combination and splitting processing on the probe frequency optical signals and the uplink and downlink service frequency optical signals;
optical line terminal (OLT) 103, the module composition of which is as shown in Fig. 5;
trunk section optical fiber104;
distribution section optical fiber 105, which mainly consists of: optical splitter 1051 and port optical filtering 1052;
access section optical fiber106, wherein 1061 refers to the access section optical fiber connected to ONU11, 1062 refers to the access section optical fiber connected to ONU12, and 1063 refers to the access section optical fiber connected to ONU13;
107/108/109 correspond to optical network units ONU11/ONU12/ONU13 with the same module structural design, the module composition of which is as shown in Fig. 6.

The implementation of a Raman pump source takes a GPON system as an example. ONU11/ONU12/ONU13 support the GPON standard for uplink transmission. For a specific implementation of the Raman pump source, reference can be made to EP 3 869 709 A1. An ONU structure shown in Fig. 3 is designed to send a Raman pump optical signal in an idle time slot. In the GPON system, an uplink service optical signal has a wavelength of 1310 nm. The Raman pump optical signal sent by the pump source has a wavelength same as the wavelength of a service optical signal, and is sent by the TX module shown in Fig. 6.

The distribution section optical fiber 105 and the port optical filter 1052 are designed according to Fig. 7 and Table 1. According to the Raman amplification gain spectrum in Fig. 3, the probe optical signals can be selected within a 48 nm bandwidth range. For example, 8 different probe optical signal wavelengths are selected at a wavelength interval of 5 nm between 1360 nm and 1400 nm, which are sequentially sent by the TX module 1012 of the probe processing unit in Fig. 11. The distribution section optical fiber is connected to ONU12 108 via the access section optical fiber 1062.

An OLT 103 notifies a management control module 1014 of a probe processing unit 101. The module notifies, according to an instruction, a TX module 1012 of the probe processing unit 101 to sequentially send 8 different probe optical signals. At the same time, the RX 1011 of the probe processing unit 101 gets ready to receive the corresponding 8 backscattered signals. When 1-8 probe optical signals sequentially pass through the distribution section optical fiber 105, they are blocked or pass through to enter the access fiber 1062 connected to the ONU12 108 via the optical filter design shown in Fig. 6. At the same time, the RX module 1011 also sequentially receives backscattered powers PS1-PS8 corresponding to the 1-8 probe optical signals.

Upon completion of the transmission of the 1-8 probe optical signals, the probe processing unit 101 notifies the OLT 103. Thereafter, the OLT 103 notifies a management control module 1014 of the probe processing unit 101. The module notifies, according to an instruction, a TX module 1012 of the probe processing unit 101 to sequentially send 8 different probe optical signals. At the same time, the OLT 103 issues a signal instruction to ONU12 108 to notify same to send Raman pump optical signals. When 1-8 probe optical signals sequentially pass through the distribution section optical fiber 105, they are blocked or pass through to enter the access fiber 1062 connected to the ONU12 108 via the optical filter design shown in Fig. 6. At the same time, the RX module 1011 also sequentially receives backscattered powers PS1'-PS8' corresponding to the 1-8 probe optical signals.

Upon completion of the transmission of the 1-8 probe optical signals, the probe processing unit 101 notifies the OLT 103, and the OLT 103 issues a signal instruction to the ONU12 108 to notify same to stop sending Raman pump optical signals. The probe processing unit performs difference processing on the received backscattered powers PS and PS' corresponding to the same probe optical signal, so as to obtain difference powers ΔPS1-ΔPS8 corresponding to 1-8 probe optical signals. The result is obtained as shown in the fifth row in Table 7. ΔPS1 is a lower power when the probe optical signal 4 is sent, and the power values corresponding to all the other 7 probe optical signals are larger values.

According to the principle of Raman gain, in the process of sending the pump optical signals by the ONU12 108, the probe optical signals and the backscattered optical signals which enter the access optical fiber section will be amplified and the energy of the pump optical signals will be reduced, and the probe optical signals which do not enter the access optical fiber section will not undergo energy transfer and the energy of the pump optical signals will not be reduced. The received backscattered power differences are analyzed. Because ΔPS1 is a lower power, it can be obtained that the probe optical signal 4 is blocked by the optical filter from entering the access section optical fiber 1062 connected to the ONU12 108, and the other 7 probe optical signals are selected by the optical filter to enter the access section optical fiber 1062 connected to the ONU12 108.

**Table 7**

| probe frequency optical signal | 1 | 2 | 3 | **4** | 5 | 6 | 7 | 8 |
|---|---|---|---|---|---|---|---|---|
| the received backscattered signal power when no Raman pump light is sent | PS1 | PS2 | PS3 | **PS4** | PS5 | PS6 | PS7 | PS8 |
| the received backscattered signal power when the ONU12 sends the Raman pump light | PS1' | PS2' | PS3' | **PS4'** | PS5' | PS6' | PS7' | PS8' |
| comparative analysis | ΔPS1 | ΔPS2 | ΔPS3 | **ΔPS4** | ΔPS5 | ΔPS6 | ΔPS7 | ΔPS8 |
| | higher | higher | higher | **lower** | higher | higher | higher | higher |
| | pass | pass | pass | **block** | pass | pass | pass | pass |

Finally, by comparing the obtained results with the port optical filter 1052 designed according to Fig. 7 and Table 1, it is found that the optical filter characteristics match those designed for branch link 4. Thus, it is determined that the optical splitter port connected to the ONU12 108 is optical splitter port 4.

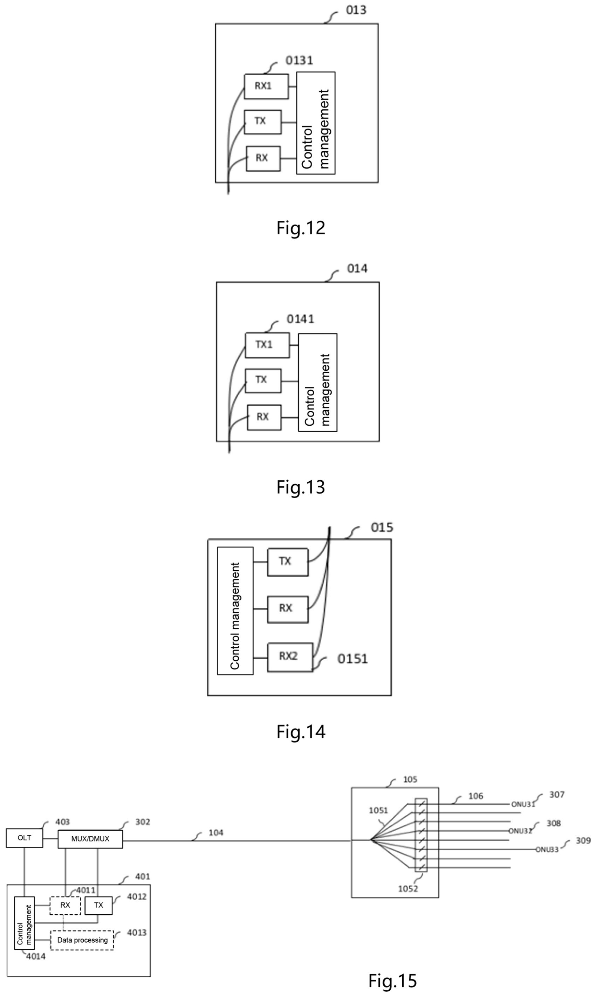

An ONU receives probe optical signals for port identification. Fig. 11 is a block diagram of an ONU receiving probe optical signals for port identification according to an embodiment of the present invention, as shown in Fig. 11. Fig. 12 is a schematic structural diagram of an ONU with an added probe optical receiving module according to an embodiment of the present invention. ONU21/ONU22/ONU23 are implemented according to the structure of the ONU module shown in Fig. 12. Compared with Fig. 6, a module RX1 0131 is added to the ONU module. The module 0131 is configured to receive probe frequency optical signals sent by TX 2012 of a probe unit 201 in Fig. 13. The probe unit 201 in the system in Fig. 11 and the probe unit 201 in the system in Fig. 4 may be implemented by the same structure.

In the system as shown in Fig. 11, the implementation of a Raman pump source takes a GPON system as an example. ONU11/ONU12/ONU13 support the GPON standard for uplink transmission. For a specific implementation of the Raman pump source, reference can be made to EP 3 869 709 A1. An ONU structure shown in Fig. 3 is designed to send a Raman pump optical signal in an idle time slot. In the GPON system, an uplink service optical signal has a wavelength of 1310 nm. The Raman pump optical signal sent by the pump source has a wavelength same as the wavelength of a service optical signal, and is sent by the TX module shown in Fig. 6.
probe processing unit 201, which mainly includes probe optical signal transmitter TX 2012, and control management 2014;
optional modules: probe light OTDR optical signal receiver RX 2011 and data processing 2013, capable of receiving and processing backscattered signals of the probe frequency optical signals;
combiner/splitter unit 102, which is configured to perform combination and splitting processing on the probe frequency optical signals and the uplink and downlink service frequency optical signals;
optical line terminal (OLT) 103, the module composition of which is as shown in Fig. 5;
trunk section optical fiber 104;
distribution section optical fiber 105, which mainly consists of: optical splitter 1051 and port optical filtering 1052;
access section optical fiber 106, wherein 1061 refers to the access section optical fiber connected to ONU21, 1062 refers to the access section optical fiber connected to ONU22, and 1063 refers to the access section optical fiber connected to ONU23;
207/208/209 correspond to optical network units ONU21/ONU22/ONU23 with the same module structural design, the module composition of which is as shown in Fig. 12.

The distribution section optical fiber 105 and the port optical filter 1052 are designed according to Fig. 7 and Table 1. According to the Raman amplification gain spectrum in Fig. 4, the probe optical signals can be selected within a 48 nm bandwidth range. For example, 8 different probe optical signal wavelengths are selected at a wavelength interval of 5 nm between 1360 nm and 1400 nm, which are sequentially sent by the TX module 2012 of the probe processing unit in Fig. 13. The distribution section optical fiber is connected to ONU22 208 via the access section optical fiber 1062.

An OLT 103 notifies a management control module 2014 of a probe processing unit 201. The module notifies, according to an instruction, a TX module 2012 of the probe processing unit 201 to sequentially send 8 different probe optical signals. At the same time, the OLT 103 issues a signal instruction to ONU22 208 to notify same to send Raman pump optical signals. The RX1 of ONU22 208 implemented by the structure as shown in Fig. 12 gets ready to receive powers of the probe optical signals. When 1-8 probe optical signals sequentially pass through the distribution section optical fiber 105, they are blocked or pass through to enter the access fiber 1062 connected to the ONU22 208 via the optical filter design shown in Fig. 6.

When probe optical signal 1 is sent, the RX1 module of ONU22 208 will receive probe optical signal power PT1, and when probe optical signal 2 is sent, the RX1 module of ONU22 208 will receive pump optical signal PT2. This continues in sequence until probe optical signal 8 is sent, at which point the RX1 module of ONU22 208 will receive pump optical signal PT8. As shown in Table 8, the TX module 2012 of the probe processing unit 201 sequentially sends probe optical signals 1-8, and the RX1 module of ONU22 208 sequentially receives pump optical powers PT1-PT8.

Upon completion of the transmission of the 1-8 probe optical signals, the probe processing unit 201 notifies the OLT 103, and at this time, the OLT 103 issues a signal instruction to the ONU12 108 to notify same to stop sending Raman pump optical signals.

The ONU22 208 sequentially compares the probe optical signal powers PT1-PT8 corresponding to the received probe optical signals 1-8, and obtains the result as shown in the third row in Table 8. The power value received when the probe optical signal 4 is sent is a lower power, and the power values corresponding to all the other 7 probe optical signals are larger values.

Optionally, the ONU22 208 sends probe optical signal power information PT1-PT8 corresponding to the received probe optical signals 1-8 to the OLT 103 via an uplink service channel. The OLT 103 sequentially compares the probe optical signal powers PT1-PT8 corresponding to the received probe optical signals 1-8, and obtains the result as shown in the third row in Table 7. The power value received when the probe optical signal 4 is sent is a lower power, and the power values corresponding to all the other 7 probe optical signals are larger values.

According to the principle of Raman gain, in the process of sending the pump optical signals by the ONU22 208, the probe optical signals which enter the access optical fiber section will be amplified and the energy of the pump optical signals will be reduced, and the probe optical signals which do not enter the access optical fiber section will not undergo energy transfer and the energy of the pump optical signals will not be reduced. The received probe optical signal powers are analyzed. Because PT4 is a lower power, it can be obtained that the probe optical signal 4 is blocked by the optical filter from entering the access section optical fiber 1062 connected to the ONU22 208, and the other 7 probe optical signals are selected by the optical filter to enter the access section optical fiber 1062 connected to the ONU22 208.

Finally, by comparing the obtained results with the port optical filter 1052 designed according to Fig. 7 and Table 1, it is found that the optical filter characteristics match those designed for branch link 4. Thus, it is determined that the optical splitter port connected to the ONU22 208 is optical splitter port 4.

**Table 8**

| probe frequency optical signal | 1 | 2 | 3 | 4 | 5 | 6 | 7 | 8 |
|---|---|---|---|---|---|---|---|---|
| the probe optical signal power received by the ONU22 | PT1 | PT2 | PT3 | PT4 | PT5 | PT6 | PT7 | PT8 |
| comparative analysis | higher | higher | higher | lower | higher | higher | higher | higher |
| | pass | pass | pass | block | pass | pass | pass | pass |

A third wavelength pump source is added to an ONU device. Fig. 13 is a block diagram of an ONU device with an added third wavelength pump source according to an embodiment of the present invention. Compared with the ONU structure shown in Fig. 6, the ONU structure shown in Fig. 13 is added with a TX1 module, which is configured to send a third wavelength pump source optical signal. The implementation of this optical signal requires to distinguish it from the uplink and downlink service wavelengths of the PON system. For example, C/L/U bands can be used. In the present embodiment, the Raman pump source wavelength is selected to be 1550 nm, and the probe optical signal source wavelength can be selected to be between 1625 nm and 1650 nm.

An OLT device receives third wavelength pump source optical signals. Fig. 14 is a block diagram of an OLT device according to an optional embodiment of the present invention. Fig. 14 shows an RX2 module in the OLT device structure.

Fig. 15 is a system block diagram I of port identification according to an optional embodiment of the present invention. As shown in Fig. 15, the system includes:
probe processing unit401, which mainly includes probe optical signal transmitter TX 4012, and control management 4014;
optional modules: probe light OTDR optical signal receiver RX 4011 and data processing 4013, capable of receiving and processing backscattered signals of the probe frequency optical signals;
combiner/splitter unit 302, which is configured to perform combination and splitting processing on the probe frequency optical signals, the pump source optical signals and the uplink and downlink service frequency optical signals;
optical line terminal (OLT) 403, the module composition of which is as shown in 015 in Fig. 14. Compared with the OLT structure as shown in Fig. 5, an RX2 module 0151 is added and is configured to receive powers of third wavelength pump source optical signals;
trunk section optical fiber 104;
distribution section optical fiber 105, which mainly consists of: optical splitter 1051 and port optical filtering 1052;
access section optical fiber 106;
307/308/309 correspond to optical network units ONU31/ONU32/ONU33 with the same module structural design, the module composition of which is as shown in Fig. 13.

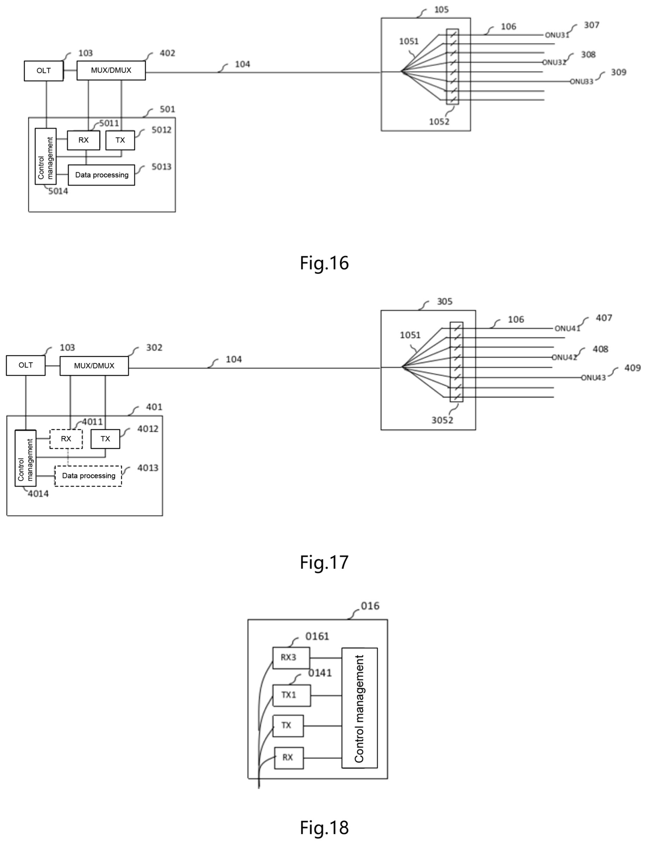

A probe processing unit receives third wavelength pump source optical signals. Fig. 16 is a system block diagram II of port identification according to an optional embodiment of the present invention. As shown in Fig. 16, the system includes:
probe processing unit 501, which mainly includes probe frequency optical transmitter TX 5012, third wavelength pump source optical signal receiver RX 5011, data processing 5013 and control management 5014;
combiner/splitter unit 402, which is configured to perform combination and splitting processing on the probe frequency optical signals, the pump optical signals and the uplink and downlink service frequency optical signals;
optical line terminal (OLT) 103, the module composition of which is as shown in Fig. 5;
trunk section optical fiber 104;
distribution section optical fiber 105, which mainly consists of: optical splitter 1051 and port optical filtering 1052;
access section optical fiber 106;
307/308/309 correspond to optical network units ONU31/ONU32/ONU33 with the same module structural design, the module composition of which is as shown in Fig. 13, wherein TX1 0141 is configured to send a pump source optical signal.

A third wavelength pump source is added at the ONU side, and the ONU side receives the probe optical signal powers for port identification. Fig. 17 is a system block diagram III of port identification according to an optional embodiment of the present invention. As shown in Fig. 17, the system includes:
probe processing unit 401, which mainly includes probe optical signal transmitter TX 4012, and control management 4014;
optional modules: probe light OTDR optical signal receiver RX 4011 and data processing 4013 in the figure, capable of receiving and processing backscattered signals of the probe frequency optical signals;
combiner/splitter unit 302, which is configured to perform combination and splitting processing on the probe frequency optical signals and the uplink and downlink service frequency optical signals;
optical line terminal (OLT) 403, the module composition of which is as shown in Fig. 5;
trunk section optical fiber 104;
distribution section optical fiber 305, which mainly consists of: optical splitter 1051 and port optical filtering 3052;
access section optical fiber 106;
407/408/409 correspond to optical network units ONU41/ONU42/ONU43. Fig. 18 is a block diagram of optical network unit module composition according to an embodiment of the present invention, and the composition of this type of optical network unit module is as shown in Fig. 18, wherein TX1 0141 is configured to send pump source optical signals, and 0161 is configured to receive the probe optical signal powers sent by the probe processing unit 401.

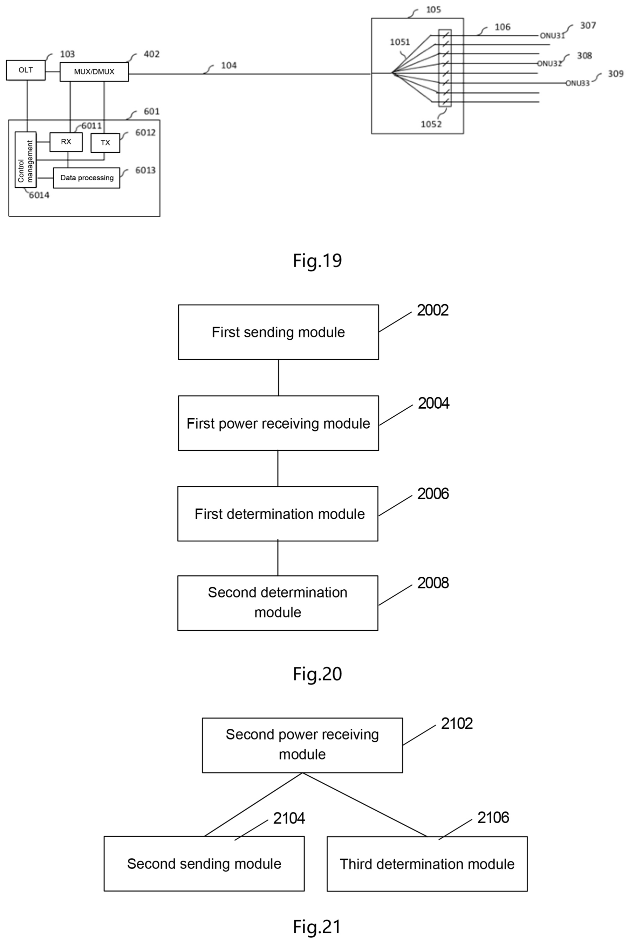

A third wavelength pump source is added at the ONU side, and the probe processing unit receives the backscattered signal powers for port identification. Fig. 19 is a system block diagram IV of port identification according to an optional embodiment of the present invention. As shown in Fig. 19, the system includes:
probe processing unit 601, which mainly includes probe frequency optical transmitter TX 6012, optical signal backscattered signal power receiver RX 6011, data processing 6013 and control management 6014;
combiner/splitter unit 402, which is configured to perform combination and splitting processing on the probe frequency optical signals, the pump optical signals and the uplink and downlink service frequency optical signals;
optical line terminal (OLT) 103, the module composition of which is as shown in Fig. 5;
trunk section optical fiber 104;
distribution section optical fiber 105, which mainly consists of: optical splitter 1051 and port optical filtering 1052;
access section optical fiber 106;
307/308/309 correspond to optical network units ONU31/ONU32/ONU33 with the same module structural design, the module composition of which is as shown in Fig. 13, wherein TX1 0141 is configured to send a pump source optical signal.

The embodiments of the present invention further provide an apparatus for determining an optical splitter port connected to an optical network unit. Fig. 20 is a block diagram I of an apparatus for determining an optical splitter port connected to an optical network unit according to an embodiment of the present invention. As shown in Fig. 20, the apparatus is applied to an optical line terminal (OLT). The apparatus includes:
a first sending module 2002, configured to sequentially send a plurality of probe optical signals having different wavelengths, and notify a designated target optical network unit (ONU) to send a Raman pump signal, wherein the probe optical signals are combined with a downlink service optical signal and then injected into a trunk optical fiber, and are blocked or enter an access optical fiber and a plurality of ONUs after being subjected to filtering by an optical filter at an optical splitter port of a distribution optical fiber, and a Raman effect is generated between the probe optical signals which enter the ONUs via the optical filter and the Raman pump signal;
a first power receiving module 2004, configured to sequentially receive optical signal powers of characteristic signals corresponding to the plurality of probe optical signals, wherein one probe optical signal corresponds to one optical signal power;
a first determination module 2006, configured to determine optical filtering characteristics of an optical splitter port according to the power change characteristics of the optical signal powers; and
a second determination module 2008, configured to determine the optical splitter port connected to the target ONU according to the optical filtering characteristics of the optical splitter port, wherein the target ONU is one of the plurality of ONUs.

In an embodiment, the second determination module 2008 includes:
a first comparison sub-module, configured to compare the optical filtering characteristics of the optical splitter port with preset optical filter characteristics of each optical splitter port; and
a first determination sub-module, configured to determine the optical splitter port with a comparison result indicating the same optical filtering characteristics as the optical splitter port connected to the target ONU.

In an embodiment, the first sending module 2002 is further configured to notify a preset probe processing unit to sequentially send the plurality of probe optical signals.

In an embodiment, the probe processing unit is a board/card device of the OLT or a device independent of the OLT; or the probe processing unit is provided at an input port side of the optical splitter.

In an embodiment, the first power receiving module 2004 includes:
a first receiving sub-module, configured as the characteristic signals are Raman pump optical signals, backscattered signals or probe optical signals; and configured to receive, by the receiving module, Raman pump optical signal powers or backscattered signal powers of the probe optical signals; or
a second receiving sub-module, configured to receive, by the receiving module, probe optical signal powers sent by the target ONU via an uplink service channel; wherein the optical signal powers are one of the following: the Raman pump optical signal powers, the backscattered signal powers and the probe optical signal powers.

In an embodiment, the receiving module is one of the following: a receiver of the OLT, a receiver of the probe processing unit, and a third wavelength receiver added in the OLT, wherein the third wavelength is a non-service wavelength.

In an embodiment, the first receiving sub-module is further configured to, in a case where the receiving module is the receiver of the OLT, receive, by the receiver of the OLT, Raman pump optical signal powers sent by an uplink service sending source of the target ONU; in a case where the receiving module is the receiver of the probe processing unit, receive, by the receiver of the probe processing unit, Raman pump optical signal powers or backscattered signal powers of the probe optical signals sent by an optical signal source of the third wavelength newly added in the target ONU; and in a case where the receiving module is the third wavelength receiver added in the OLT, receive, by the third wavelength receiver added in the OLT, Raman pump optical signal powers sent by the third wavelength optical signal source added in the ONU.

In an embodiment, the apparatus further includes:
a first classification module, configured to, in a case where the receiving module is the receiver of the OLT, compare and classify the Raman pump optical signal powers corresponding to the plurality of probe optical signals to obtain a first power class and a second power class, wherein the power of the first power class is greater than the power of the second power class, the probe optical signals corresponding to the first power class are blocked from entering the access optical fiber by the optical filter, and the probe optical signals corresponding to the second power class are allowed to enter the access optical fiber by the optical filter; and
a second classification module, configured to, in a case where the receiving module is the receiver of the probe processing unit or the third wavelength receiver added in the OLT, compare and classify, by the probe processing unit, the Raman pump optical signal powers or the backscattered signal powers corresponding to the plurality of probe optical signals to obtain the first power class and the second power class; wherein the power change characteristics are determined on the basis of the first power class and the second power class.

In an embodiment, the second classification module is further configured to:
respectively perform difference processing on the backscattered signal powers corresponding to the plurality of probe optical signals and initial backscattered signal powers corresponding to the plurality of probe optical signals, so as to obtain a plurality of differences; and
classify the plurality of differences to obtain the first power class and the second power class.

In an embodiment, the apparatus further includes:
a notification module, configured to notify the probe processing unit to sequentially send the plurality of probe optical signals; receive, by the probe processing unit, initial backscattered signal powers corresponding to the plurality of probe optical signals; and notify the probe processing unit to stop sending the probe optical signals.

In an embodiment, the comparison sub-module is further configured to, in a case where the receiving module is the receiver of the OLT, compare the optical filtering characteristics of the optical splitter port with preset optical filter characteristics of each optical splitter port; and in a case where the receiving module is the receiver of the probe processing unit or the receiver of the third wavelength newly added in the OLT, compare the optical filtering characteristics of the optical splitter port with preset optical filter characteristics of each optical splitter port by the probe processing unit.

In an embodiment, the plurality of ONUs simultaneously support a plurality of standards, and the target ONU sends the Raman pump optical signal via an uplink service sending source of a target standard which is currently in an idle state among the plurality of standards.

In an embodiment, the Raman pump signal has a third wavelength, wherein the third wavelength is a non-service wavelength; or the wavelength of the Raman pump optical signal is the same as the wavelength of a service optical signal.

The embodiments of the present invention further provide an apparatus for determining an optical splitter port connected to a network unit. Fig. 21 is a block diagram II of an apparatus for determining an optical splitter port connected to an optical network unit according to an embodiment of the present invention. As shown in Fig. 21, the apparatus is applied to an optical network unit (ONU). The apparatus includes:
a second power receiving module 2102, configured to receive a plurality of probe optical signals having different wavelengths which are sequentially sent by an optical line terminal (OLT), wherein the probe optical signals are combined with a downlink service optical signal and then injected into a trunk optical fiber, and are blocked or enter an access optical fiber and a plurality of ONUs after being subjected to filtering by an optical filter at an optical splitter port of a distribution optical fiber, and a Raman effect is generated between the probe optical signals which enter the ONUs via the optical filter and a Raman pump signal;
a second sending module 2104, configured to send the Raman pump signal on the basis of a notification of the OLT, such that the OLT sequentially receives optical signal powers of characteristic signals corresponding to the plurality of probe optical signals, determine optical filtering characteristics of an optical splitter port according to the power change characteristics of the optical signal powers, and determine the optical splitter port connected to a target ONU according to the optical filtering characteristics of the optical splitter port, wherein one probe optical signal corresponds to one optical signal power, and the target ONU is one of the plurality of ONUs; or
a third determination module 2106, configured to send the Raman pump signal via the notification of the OLT, sequentially receive probe optical signal powers corresponding to the plurality of probe optical signals, determine optical filtering characteristics of an optical splitter port according to the power change characteristics of the optical signal powers, and determine the optical splitter port connected to the target ONU according to the optical filtering characteristics of the optical splitter port.

In an embodiment, the third determination module 2106 includes:
a second comparison sub-module, configured to compare the optical filtering characteristics of the optical splitter port with preset optical filter characteristics of each optical splitter port; and
a second determination sub-module, configured to determine the optical splitter port with a comparison result indicating the same optical filtering characteristics as the optical splitter port connected to the target ONU.

In an embodiment, the third determination module 2106 is further configured to receive, by an added probe optical receiving module, probe optical signal powers corresponding to the plurality of probe optical signals sent by the OLT via a probe processing unit.

In an embodiment, the second sending module 2104 is configured to, in a case where the Raman pump signal has a third wavelength, send the Raman pump signal via an added third wavelength pump source on the basis of the notification of the OLT, wherein the third wavelength is a non-service wavelength; or in a case where the wavelength of the Raman pump optical signal is the same as the wavelength of a service optical signal, send the Raman pump signal via a pump source on the basis of the notification of the OLT.

In an embodiment, the optical signal powers are one of the following: Raman pump optical signal powers, backscattered signal powers and probe optical signal powers.

The embodiments of the present invention further provide a computer-readable storage medium. The computer-readable storage medium storing a computer program, wherein the computer program is configured to execute the steps in any one of the described method embodiments when running.

In an exemplary embodiment, the computer-readable storage medium may include, but is not limited to, any medium that can store a computer program, such as a USB flash disk, a Read-Only Memory (ROM), a Random Access Memory (RAM), a mobile hard disk, a magnetic disk, or an optical disk.

The embodiments of the present invention further provide an electronic device, comprising a memory and a processor, wherein the memory stores a computer program, and the processor is configured to execute the computer program to perform the steps in any of the described method embodiments.

In an exemplary embodiment, the electronic device may further include a transmission device and an input/output device, wherein the transmission device is connected to the processor, and the input/output device is connected to the processor.

For specific examples in the present embodiment, reference may be made to the examples described in the foregoing embodiments and exemplary implementations, and details are not repeatedly described in the present embodiment.

Obviously, those skilled in the art should understand that various modules or various steps in the embodiments of the present invention can be implemented by a universal computing apparatus, and the various modules or steps can be integrated on a single computing apparatus or distributed over a network formed by a plurality of computing apparatuses, and can be implemented by program codes executable by the computing apparatus, such that the modules or steps can be stored in a storage apparatus and executed by the computing apparatus, and the shown or described steps can be executed in sequences different from those described here in some cases, or the various modules or steps can be implemented by manufacturing the modules or steps into various integrated circuit modules respectively, or manufacturing multiple modules or steps among the various modules or steps into a single integrated circuit module. Thus, the present invention is not limited to any particular combination of hardware and software.

The foregoing descriptions are merely preferred embodiments of the present invention, and are not intended to limit the present invention. For those skilled in the art, the present invention may have various modifications and variations. Any modifications, equivalent replacements, improvements and the like made within the principle of the present invention shall belong to the scope of protection of the present invention.

## Claims

1. A method for determining an optical splitter port connected to an optical network unit, performed by an optical line terminal ,OLT, wherein the method comprises:
sequentially sending a plurality of probe optical signals having different wavelengths, and notifying a designated target optical network unit ,ONU, to send a Raman pump signal, wherein the probe optical signals are combined with a downlink service optical signal and then injected into a trunk optical fiber, and are blocked or enter an access optical fiber and a plurality of ONUs after being subjected to filtering by an optical filter at an optical splitter port of a distribution optical fiber, and a Raman effect is generated between the probe optical signals which enter the ONUs via the optical filter and the Raman pump signal;
sequentially receiving optical signal powers of characteristic signals corresponding to the plurality of probe optical signals, wherein one probe optical signal corresponds to one optical signal power;
determining optical filtering characteristics of an optical splitter port according to the power change characteristics of the optical signal powers; and
determining the optical splitter port connected to the target ONU according to the optical filtering characteristics of the optical splitter port, wherein the target ONU is one of the plurality of ONUs.

2. The method according to claim 1, wherein determining the optical splitter port connected to the target ONU according to the optical filtering characteristics of the optical splitter port comprises:
comparing the optical filtering characteristics of the optical splitter port with preset optical filter characteristics of each optical splitter port; and
determining the optical splitter port with a comparison result indicating the same optical filtering characteristics as the optical splitter port connected to the target ONU.

3. The method according to claim 2, wherein sequentially sending a plurality of probe optical signals having different wavelengths comprises:
notifying a preset probe processing unit to sequentially send the plurality of probe optical signals.

4. The method according to claim 3, wherein
the probe processing unit is a board/card device of the OLT or a device independent of the OLT; or
the probe processing unit is provided at an input port side of the optical splitter.

5. The method according to claim 3, wherein sequentially receiving optical signal powers of characteristic signals corresponding to the plurality of probe optical signals comprises:
the characteristic signals are Raman pump optical signals, backscattered signals or probe optical signals;
receiving, by a receiving module, Raman pump optical signal powers or backscattered signal powers of the probe optical signals; or
receiving, by a receiving module, probe optical signal powers sent by the target ONU via an uplink service channel;
wherein the optical signal powers are one of the following: the Raman pump optical signal powers, the backscattered signal powers and the probe optical signal powers.

6. The method according to claim 5, wherein
the receiving module is one of the following: a receiver of the OLT, a receiver of the probe processing unit, and a third wavelength receiver added in the OLT, wherein the third wavelength is a non-service wavelength.

7. The method according to claim 6, wherein receiving, by a receiving module, Raman pump optical signal powers or backscattered signal powers of the probe optical signals comprises:
in a case where the receiving module is the receiver of the OLT, receiving, by the receiver of the OLT, Raman pump optical signal powers sent by an uplink service sending source of the target ONU;
in a case where the receiving module is the receiver of the probe processing unit, receiving, by the receiver of the probe processing unit, Raman pump optical signal powers or backscattered signal powers of the probe optical signals sent by a third wavelength optical signal source added in the target ONU; and
in a case where the receiving module is the third wavelength receiver added in the OLT, receiving, by the third wavelength receiver added in the OLT, Raman pump optical signal powers sent by the third wavelength optical signal source added in the ONU.

8. The method according to claim 6, wherein before comparing the optical filtering characteristics of the optical splitter port with preset optical filter characteristics of each optical splitter port, the method further comprises:
in a case where the receiving module is the receiver of the OLT, comparing and classifying the Raman pump optical signal powers corresponding to the plurality of probe optical signals to obtain a first power class and a second power class, wherein the power of the first power class is greater than the power of the second power class, the probe optical signals corresponding to the first power class are blocked from entering the access optical fiber by the optical filter, and the probe optical signals corresponding to the second power class are allowed to enter the access optical fiber by the optical filter; and
in a case where the receiving module is the receiver of the probe processing unit or the third wavelength receiver added in the OLT, comparing and classifying, by the probe processing unit, the Raman pump optical signal powers or the backscattered signal powers corresponding to the plurality of probe optical signals to obtain the first power class and the second power class;
wherein the power change characteristics are determined on the basis of the first power class and the second power class.

9. The method according to claim 8, wherein comparing and classifying, by the probe processing unit, the backscattered signal powers corresponding to the plurality of probe optical signals to obtain the first power class and the second power class comprise:
respectively performing difference processing on the backscattered signal powers corresponding to the plurality of probe optical signals and initial backscattered signal powers corresponding to the plurality of probe optical signals, so as to obtain a plurality of differences; and
classifying the plurality of differences to obtain the first power class and the second power class.

10. The method according to claim 9, wherein before sequentially sending a plurality of probe optical signals having different wavelengths, and notifying a designated target ONU to send a Raman pump signal, the method further comprises:
notifying the probe processing unit to sequentially send the plurality of probe optical signals;
receiving, by the probe processing unit, initial backscattered signal powers corresponding to the plurality of probe optical signals; and
notifying the probe processing unit to stop sending the probe optical signals.

11. The method according to claim 8, wherein comparing the optical filtering characteristics of the optical splitter port with preset optical filter characteristics of each optical splitter port comprises:
in a case where the receiving module is the receiver of the OLT, comparing the optical filtering characteristics of the optical splitter port with preset optical filter characteristics of each optical splitter port; and
in a case where the receiving module is the receiver of the probe processing unit or the third wavelength receiver added in the OLT, comparing, by the probe processing unit, the optical filtering characteristics of the optical splitter port with preset optical filter characteristics of each optical splitter port.

12. The method according to claim 1, wherein the plurality of ONUs simultaneously support a plurality of standards, and the target ONU sends the Raman pump optical signal via an uplink service sending source of a target standard which is currently in an idle state among the plurality of standards.

13. The method according to claim 1, wherein
the Raman pump signal has a third wavelength, wherein the third wavelength is a non-service wavelength; or
the wavelength of the Raman pump optical signal is the same as the wavelength of a service optical signal.

14. A method for determining an optical splitter port connected to an optical network unit, performed by an optical network unit ,ONU, wherein the method comprises:
receiving a plurality of probe optical signals having different wavelengths which are sequentially sent by an optical line terminal ,OLT, wherein the probe optical signals are combined with a downlink service optical signal and then injected into a trunk optical fiber, and are blocked or enter an access optical fiber and a plurality of ONUs after being subjected to filtering by an optical filter at an optical splitter port of a distribution optical fiber, and a Raman effect is generated between the probe optical signals which enter the ONUs via the optical filter and a Raman pump signal;
sending the Raman pump signal on the basis of a notification of the OLT, such that the OLT sequentially receives optical signal powers of characteristic signals corresponding to the plurality of probe optical signals, determining optical filtering characteristics of an optical splitter port according to the power change characteristics of the optical signal powers, and determining the optical splitter port connected to a target ONU according to the optical filtering characteristics of the optical splitter port, wherein one probe optical signal corresponds to one optical signal power, and the target ONU is one of the plurality of ONUs; or
sending the Raman pump signal via the notification of the OLT, sequentially receiving probe optical signal powers corresponding to the plurality of probe optical signals, determining optical filtering characteristics of an optical splitter port according to the power change characteristics of the optical signal powers, and determining the optical splitter port connected to the target ONU according to the optical filtering characteristics of the optical splitter port.

15. The method according to claim 14, wherein determining an optical splitter port connected to the target ONU according to the optical filtering characteristics of the optical splitter ports comprises:
comparing the optical filtering characteristics of the optical splitter ports with preset optical filtering characteristics of each optical splitter port; and
determining the optical splitter port with a comparison result indicating the same optical filtering characteristics as the optical splitter port connected to the target ONU.

16. The method according to claim 14, wherein sequentially receiving probe optical signal powers corresponding to the plurality of probe optical signals comprises:
receiving, by an added probe optical receiving module, probe optical signal powers corresponding to the plurality of probe optical signals sent by the OLT via a probe processing unit.

17. The method according to claim 14, wherein sending the Raman pump signal on the basis of a notification of the OLT comprises:
in a case where the Raman pump signal has a third wavelength, sending the Raman pump signal via an added third wavelength pump source on the basis of the notification of the OLT, wherein the third wavelength is a non-service wavelength; or
in a case where the wavelength of the Raman pump optical signal is the same as the wavelength of a service optical signal, sending the Raman pump signal via a pump source on the basis of the notification of the OLT.

18. The method according to any of claims 14 to 17, wherein the optical signal powers are one of the following: Raman pump optical signal powers, backscattered signal powers and probe optical signal powers.

19. An apparatus for determining an optical splitter port connected to an optical network unit, applied in an optical line terminal OLT; wherein the apparatus comprises:
a first sending module, configured to sequentially send a plurality of probe optical signals having different wavelengths, and notify a designated target optical network unit ,ONU, to send a Raman pump signal, wherein the probe optical signals are combined with a downlink service optical signal and then injected into a trunk optical fiber, and are blocked or enter an access optical fiber and a plurality of ONUs after being subjected to filtering by an optical filter at an optical splitter port of a distribution optical fiber, a Raman effect is generated between the probe optical signals which enter the ONUs via the optical filter and the Raman pump signal, and the target ONU is one of the plurality of ONUs;
a first power receiving module, configured to sequentially receive optical signal powers of characteristic signals corresponding to the plurality of probe optical signals, wherein one probe optical signal corresponds to one optical signal power;
a first determination module, configured to determine optical filtering characteristics of an optical splitter port according to the power change characteristics of the optical signal powers; and
a second determination module, configured to determine the optical splitter port connected to the target ONU according to the optical filtering characteristics of the optical splitter port.

20. An apparatus for determining an optical splitter port connected to a network unit, applied in an optical network unit ,ONU, wherein the apparatus comprises:
a second power receiving module, configured to receive a plurality of probe optical signals having different wavelengths which are sequentially sent by an optical line terminal ,OLT, wherein the probe optical signals are combined with a downlink service optical signal and then injected into a trunk optical fiber, and are blocked or enter an access optical fiber and a plurality of ONUs after being subjected to filtering by an optical filter at an optical splitter port of a distribution optical fiber, and a Raman effect is generated between the probe optical signals which enter the ONUs via the optical filter and a Raman pump signal;
a second sending module, configured to send the Raman pump signal on the basis of a notification of the OLT, such that the OLT sequentially receives optical signal powers of characteristic signals corresponding to the plurality of probe optical signals, determine optical filtering characteristics of an optical splitter port according to the power change characteristics of the optical signal powers, and determine the optical splitter port connected to a target ONU according to the optical filtering characteristics of the optical splitter port, wherein one probe optical signal corresponds to one optical signal power; or
a third determination module, configured to send the Raman pump signal via the notification of the OLT, sequentially receive probe optical signal powers corresponding to the plurality of probe optical signals, determine optical filtering characteristics of an optical splitter port according to the power change characteristics of the optical signal powers, and determine the optical splitter port connected to the target ONU according to the optical filtering characteristics of the optical splitter port.
